# EUROPÄISCHE PATENTSCHRIFT

(11) **EP 3 107 944 B1**
(45) Veröffentlichungstag und Bekanntmachung des Hinweises auf die Patenterteilung: **31.01.2018**
(21) Anmeldenummer: 15706206.8
(22) Anmeldetag: 18.02.2015
(51) Int. Cl.: C08F 220/18, C09J 4/06

(54) **UV-VERNETZBARE POLYMERZUSAMMENSETZUNG**
UV-CROSSLINKABLE POLYMER COMPOSITION
COMPOSITION DE POLYMÈRES RÉTICULABLE PAR UV

(30) Priorität: 18.02.2014 DE 102014202947
(43) Veröffentlichungstag der Anmeldung: 28.12.2016
(73) Patentinhaber: tesa SE, 22848 Norderstedt (DE)
(72) Erfinder: PRENZEL, Alexander, D-22529 Hamburg (DE)
(86) Internationale Anmeldenummer: PCT/EP2015/053362
(87) Internationale Veröffentlichungsnummer: WO 2015/124593

(56) Entgegenhaltungen:
- WO-A1-2013/104486
- MATTHIAS WINKLER ET AL: "Highly Orthogonal Functionalization of ADMET Polymers via Photo-Induced Diels-Alder Reactions", MACROMOLECULES, Bd. 45, Nr. 12, 26. Juni 2012 (2012-06-26) , Seiten 5012-5019, XP055082362, ISSN: 0024-9297, DOI: 10.1021/ma3007043 in der Anmeldung erwähnt
- OZCAN ALTINTAS ET AL: "A Mild and Efficient Approach to Functional Single-Chain Polymeric Nanoparticles via Photoinduced Diels-Alder Ligation", MACROMOLECULES, Bd. 46, Nr. 20, 22. Oktober 2013 (2013-10-22), Seiten 8092-8101, XP055184964, ISSN: 0024-9297, DOI: 10.1021/ma4015033

## Beschreibung

### Technisches Gebiet der Erfindung

Die vorliegende Erfindung betrifft eine Monomerzusammensetzung umfassend (i) Acrylmonomere, die ausgewählt sind aus (Meth-)Acrylsäure und (Meth-)Acrylsäureestern; (ii) (Meth-)Acrylatmonomere umfassend ein ortho-Alkyl-substituiertes Phenylketon und/oder ein ortho-Alkyl-substituiertes Benzaldehyd (im folgenden bezeichnet als "ortho-Alkylphenylketon- und/oder ortho-Alkylphenylaldehyd funktionalisierte (Meth-)-Acrylatmonomere"); sowie (iii) optional, weitere olefinisch ungesättigte Monomere mit funktionellen Gruppen. Die Erfindung betrifft ferner ein Verfahren zur Herstellung einer ersten Polymerzusammensetzung, umfassend die radikalische Polymerisation der hierin beschriebenen Monomerzusammensetzung, sowie eine nach diesem Verfahren erhältliche Polymerzusammensetzung. Ebenfalls beschrieben werden Zusammensetzungen, umfassend die genannte Polymerzusammensetzung und ein Dienophil, das mit Hydroxy-ortho-chinodimethan-funktionellen Gruppen in einer Diels-Alder- oder Hetero-Diels-Alder-Reaktion reagieren kann. Schließlich betrifft die vorliegende Erfindung auch die Umsetzung dieser Zusammensetzung zu einer vernetzten Polymerzusammensetzung.

### Stand der Technik

UV-vernetzbare Polyacrylate sind aus dem Stand der Technik bekannt und bieten Vorteile gegenüber thermisch-vernetzbaren Systemen. Beispielsweise können UV-vernetzbare Acrylatpolymere flächig auf einen Träger aufgebracht und durch Steuerung der UV-Strahlung kontrolliert vernetzt werden. Derartige dynamisch steuerbare Polymersysteme bedeuten einen wesentlichen Vorteil in einer modernen Produktionsstruktur, wenn ein komplexes Produktportfolio ausgehend von wenigen Grundbausteinen realisiert werden soll.

In herkömmlichen Verfahren können zur UV-Vernetzung von Polyacrylaten UV-Aktivatoren vom Norrish Typ I und Typ II zugesetzt werden. Bei UV-Aktivatoren vom Typ I kommt es jedoch häufig zu Konkurrenzreaktionen, wenn gesättigte Polyacrylate umgesetzt werden sollen. Aktivatoren vom Norrish Typ II erreichen eine Vernetzung unfunktionalisierter Polyacrylate, jedoch ist das Ausmaß der Vernetzung häufig gering.

Andere Ansätze des Standes der Technik gehen von Acrylatpolymeren aus, die vinylische Doppelbindungen zur Vernetzung enthalten. Zur Vernetzung solcher Polymere schlägt der Stand der Technik den Einsatz von Elektronenstrahlen vor. Der Einsatz von Elektronenstrahlen ist jedoch aufwändig und geht mitunter mit einer Schädigung der Träger einher, auf die das zu vernetzende Polymer beschichtet wird. Darüberhinaus kann es bereits während der Polymerisation der Monomere zu den Acrylatpolymeren aufgrund der vinylischen Doppelbindungen zu einer Gelbildung kommen. Vor diesem Hintergrund beschreiben die US 5,391,406 und US 5,416,127 einen Weg, bei dem Vinylgruppen mittels polymeranaloger Reaktion nachträglich eingeführt werden. Derartige funktionalisierte Polymere lassen sich aus der Schmelze beschichten und können nach Zusatz eines Photoinitiators mittels UV-Licht vernetzt werden. Aber auch bei diesem Verfahren kommt es während der Verarbeitung im Falle hoher Temperaturen und unter dem Einfluss hoher Scherkräfte zu einer Vergelung. Darüber hinaus sind polymeranaloge Reaktionen verhältnismäßig aufwendig. WO2013104486 beschreibt photoinduzierte Vernetzung von Doppelbindungen-enthaltenden Polymeren mittels pericyclischer Reaktion. Weitere Probleme ergeben sich, wenn zur Einstellung bestimmter Eigenschaften, wie einer besonderen Haftklebrigkeit, Harze zu den Acrylatpolymeren gegeben werden, da diese Harze UV-Licht absorbieren, sodass eine Vernetzung mittels UV-Licht durch die Schichtdicke limitiert wird. Darüber hinaus verliert ein großer Teil bekannter Photoinitiatoren seine Reaktivität als Vernetzungsstarter, wenn der Initiator in einem Heißschmelzprozess eingesetzt wird. Andere Initiatoren wiederum sublimieren unter thermischer Belastung und unter Vakuum, weshalb solche Initiatoren nach einem Niederdruckextrusionsschritt ebenfalls keine ausreichende Vernetzung mehr gewährleisten. Einige der zuvor genannten Nachteile können durch die Verwendung eines polyfunktionellen α-Spalters gelöst werden. Jedoch entstehen auch bei der Verwendung eines solchen α-Spalters niedermolekulare Bruchstücke, die zu einer ungewünschten Verunreinigung des Acrylatpolymers führen können. Darüber hinaus ist der angeregte Zustand einer Vielzahl von Photoinitiatoren, die eine direkte Vernetzungsreaktion erlauben, äußerst kurzlebig, wodurch der Vernetzungsschritt aus energetischen Gründen nicht ökonomisch ist.

### Aufgabe der vorliegenden Erfindung

Der vorliegenden Erfindung liegt insofern die Aufgabe zugrunde, eine verbesserte Polyacrylatzusammensetzung bereitzustellen, die einfach erhältlich ist, die in einem Heißschmelzprozess verarbeitet werden kann, die weder während des Heißschmelzprozesses noch während der Beschichtung zu einer Vergelung neigt, und deren Vernetzung aus energetischer Sicht ökonomisch durchgeführt werden kann.

### Zusammenfassung der vorliegenden Erfindung

Die vorliegende Erfindung adressiert diese Aufgabe und die Probleme des Standes der Technik indem eine Monomerzusammensetzung bereitgestellt wird, umfassend ein Gemisch von
(i) 69,9 bis 99,9 Gew.-% wenigstens eines ersten Monomers der folgenden Struktur 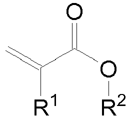 wobei R¹ Wasserstoff oder Methyl darstellt und R² Wasserstoff oder ein Alkylrest mit 1 bis 20 Kohlenstoffatomen ist;
(ii) 0,1 bis 10 Gew.-% wenigstens eines zweiten Monomers, das ein (Meth-)Acrylatmonomer ist und eine ortho-Alkylphenylketon-funktionelle Gruppe und/oder eine ortho-Alkylphenylaldehyd-funktionelle Gruppe umfasst, die durch Bestrahlung mittels UV-Licht in eine Hydroxy-ortho-chinodimethan-funktionelle Gruppe isomerisierbar ist; sowie
(iii) optional bis zu 30 Gew.-% wenigstens eines weiteren, olefinisch ungesättigten Monomers mit funktionellen Gruppen,
wobei die Angaben in Gew.-% jeweils bezogen sind auf 100 Gew.-% der Monomere (i), (ii) und (iii) in der Zusammensetzung.

Die vorliegende Erfindung betrifft ferner ein Verfahren zur Herstellung einer Polymerzusammensetzung, umfassend (a) die Bereitstellung der hierin beschriebenen Monomerzusammensetzung; und (b) die radikalische Polymerisation dieser Monomerzusammensetzung. Die mittels radikalischer Polymerisation der Monomerzusammensetzung herstellbare Polymerzusammensetzung wird im Folgenden auch als "erste Polymerzusammensetzung" bezeichnet.

In einem weiteren Aspekt betrifft die vorliegende Erfindung also erste Polymerzusammensetzungen, die nach dem genannten Verfahren erhältlich sind, sowie Zusammensetzungen, umfassend 50 bis 99,9 Gew.-% der ersten Polymerzusammensetzung und 0,1 bis 15 Gew.-%, bevorzugt 0,2 bis 12 Gew.-%, besonders bevorzugt 0,3 bis 10 Gew.-% eines Dienophils, das mit Hydroxy-ortho-chinodimethanfunktionellen Gruppen in einer Diels-Alder- oder Hetero-Diels-Alder-Reaktion reagieren kann. Diese Zusammensetzung umfassend die "erste Polymerzusammensetzung" und ein Dienophil wird im Folgenden auch als "Reaktivzusammensetzung" bezeichnet.

Ferner betrifft die vorliegende Erfindung ein Verfahren zur Herstellung einer vernetzten Polymerzusammensetzung umfassend die Bestrahlung der Reaktivzusammensetzung mit UV-Licht; sowie die nach dem Verfahren gemäß Anspruch 10 erhältliche, vernetzte Polymerzusammensetzung.

Die erfindungsgemäßen Monomerzusammensetzungen haben sich als besonders geeignet für die Bereitstellung von Polyacrylatzusammensetzungen herausgestellt, die einfach erhältlich sind, die in einem Heißschmelzprozess verarbeitet werden können, die weder während des Heißschmelzprozesses noch während der Beschichtung zu einer besonderen Vergelung führen, und deren Vernetzung aus energetischer Sicht ökonomisch ist. Hiermit ist gemeint, dass die hierin beschriebene erste Polymerzusammensetzung in Anwesenheit eines Dienophils bei geringer UV-Intensität vernetzbar ist. Die Vernetzung kommt dabei ohne unnötige Spaltprodukte aus. Die vernetzten Polymerzusammensetzungen der vorliegenden Erfindung zeichnen sich durch gute Haftklebeeigenschaften aus. Die vorliegende Erfindung betrifft insofern auch die Verwendung der vernetzten Polymerzusammensetzungen als Haftklebmasse sowie die Verwendung der Monomerzusammensetzung zur Herstellung einer solchen Haftklebmasse.

### Detaillierte Beschreibung der Erfindung

Erfindungsgemäß wird die oben beschriebene Aufgabe gelöst durch ein Verfahren zur Herstellung einer Polymerzusammensetzung, umfassend die Bereitstellung einer Monomerzusammensetzung sowie die radikalische Polymerisation dieser Monomerzusammensetzung. Erfindungsgemäß umfasst die Monomerzusammensetzung ein Gemisch von
(i) 80 bis 99,9 Gew.-%, besonders bevorzugt 90 bis 99,5 Gew.-% wenigstens eines ersten Monomers der folgenden Struktur 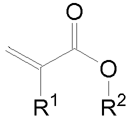 wobei R¹ Wasserstoff oder Methyl darstellt und R² Wasserstoff oder ein Alkylrest mit 1 bis 20 Kohlenstoffatomen ist;
(ii) 0,1 bis 10 Gew.-%, bevorzugt 0,5 bis 5 Gew.-% wenigstens eines zweiten Monomers, das ein (Meth-)Acrylatmonomer ist und eine ortho-Alkylphenylketon-funktionelle Gruppe und/oder eine ortho-Alkylphenylaldehyd-funktionelle Gruppe umfasst, die durch Bestrahlung mittels UV-Licht in eine Hydroxy-ortho-chinodimethan-funktionelle Gruppe isomerisierbar ist; sowie
(iii) optional bis zu 10 Gew.-% wenigstens eines weiteren, olefinisch ungesättigten Monomers mit funktionellen Gruppen,
wobei die Angaben in Gew.-% jeweils bezogen sind auf 100 Gew.-% der Monomere (i), (ii) und (iii) in der Zusammensetzung.

Bevorzugt weist die ortho-Alkylphenylketon-funktionelle Gruppe und/oder die ortho-Alkylphenylaldehyd-funktionelle Gruppe des wenigstens einen zweiten Monomers die folgende Struktur auf: 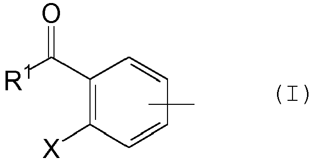 wobei R1 Wasserstoff oder Phenyl ist und X einen C-H-aciden Substituenten, bevorzugt Methyl darstellt.

Besonders bevorzugt weist das zweite Monomer die folgende Struktur (II) auf: 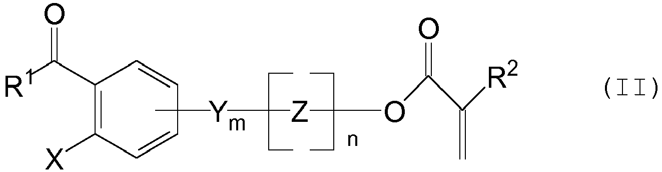 wobei R1 Wasserstoff oder Phenyl ist; X einen C-H-aciden Substituenten, bevorzugt Methyl darstellt; R2 Wasserstoff oder Methyl ist; Y ein C, O, S oder NH, bevorzugt O ist; Z eine Ethylenglykol- oder eine Propylenglykolgruppe ist oder für eine aromatische oder aliphatische C1-C18-Einheit steht; m 0 oder 1 ist; und n eine Zahl von 0-10, bevorzugt 1-10 ist.

In einer besonders bevorzugten Ausführungsform der Erfindung weist das zweite Monomer die folgende Struktur (IIa), bevorzugt eine der folgenden Strukturen (III) und (IV) auf: 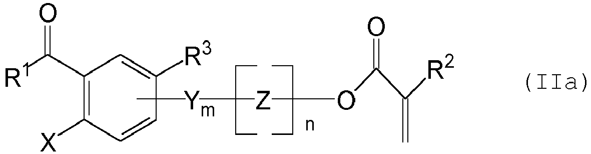 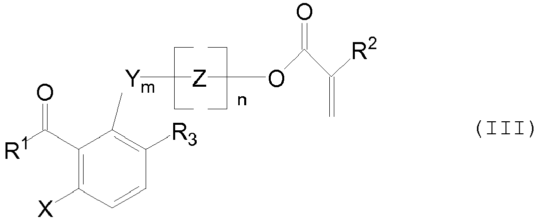 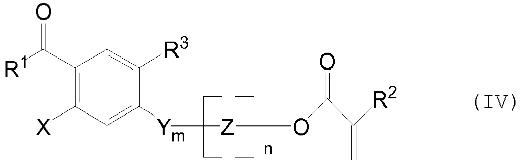 wobei R1 Wasserstoff oder Phenyl ist; X einen C-H-aciden Substituenten, bevorzugt Methyl darstellt; R2 Wasserstoff oder Methyl ist; Y ein C, O, S oder NH, bevorzugt O ist; Z eine Ethylenglykol- oder eine Propylenglykolgruppe ist oder für eine aromatische oder aliphatische C1-C18-Einheit steht; m 0 oder 1 ist; n eine Zahl von 0-10, bevorzugt 1-10 ist; und R3 Wasserstoff oder Alkyl, bevorzugt Wasserstoff oder Methyl ist. Die aromatische oder aliphatische Einheit Z in den Strukturen (II), (IIa), (IIb) und (IV) weist 1 bis 18, bevorzugt 2 bis 10 Kohlenstoffatome auf und kann substituiert oder unsubstituiert sein. Die Einheit Z in den Strukturen (II), (IIa), (III) und (IV) kann ferner Heteroatome, bevorzugt Sauerstoff, aufweisen.

Wie hierin verwendet beschreibt der Ausdruck "(Meth-)Acrylat" Ester von Methacrylsäure bzw. Acrylsäure. Entsprechend steht der Begriff "(Meth-)Acrylsäure" für Methacrylsäure bzw. Acrylsäure. Unter dem Ausdruck "ortho-Alkylphenylketon" und "ortho-Alkylphenylaldehyd" versteht die vorliegende Erfindung Phenylketon- bzw. Benzaldehyd-Gruppen, die am Phenylring in ortho-Position zur Keton- bzw. Aldehyd-Einheit Alkyl-substituiert sind, und die mittels UV-Licht in eine Hydroxy-ortho-chinodimethan-funktionelle Gruppe isomerisierbar sind. Bevorzugt handelt es sich hierbei um funktionelle Gruppen, die an ihrer Phenyleinheit in ortho-Position zur Keton- oder Aldehydeinheit eine C-H-acide Alkylgruppe aufweisen, die die Isomerisierung der ortho-Alkylphenylketon- bzw. der ortho-Alkylphenylaldehyd-Gruppe des zweiten Monomers in eine Hydroxy-ortho-chinodimethan-funktionelle Gruppe begünstigt. Hiermit ist gemeint, dass durch die Bestrahlung der Monomereinheiten des zweiten Monomers eine Hydroxy-ortho-chinodimethan-Einheit entsteht, sodass diese Monomereinheiten über eine funktionelle Gruppe verfügen, die in einer Diels-Alder- oder einer Hetero-Diels-Alder-Reaktion als Enol (im Folgenden auch "Photoenol") mit einem Dienophil reagieren kann. Die Bestrahlung mittels UV-Licht erfolgt hierfür bevorzugt in einem Wellenlängenbereich von 200 bis 400 nm, bevorzugt unter Verwendung einer Quecksilber-Hochdruck- oder einer Quecksilber-Mitteldruck-Lampe bei einer Leistung von 80 bis 200 W/cm.

In einer bevorzugten Ausführungsform der Erfindung umfasst die Monomerzusammensetzung ein Gemisch der folgenden Monomere (i) und (ii) sowie optional wenigstens eines weiteren, olefinisch ungesättigten Monomers (iii). Bevorzugte, erste Monomer der Gruppe (i) sind ausgewählt aus der Gruppe bestehend aus Acrylsäure, Methacrylsäure, Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, ihren verzweigten Isomeren (hierin auch als "Strukturisomere" benannt) wie z.B. 2-Ethylhexylacrylat, sowie Mischungen hiervon. Bevorzugt enthält die Monomerzusammensetzung der vorliegenden Erfindung 80 bis 99,9 Gew.-%, besonders bevorzugt 90 bis 99,5 Gew.-% wenigstens eines ersten Monomers der Gruppe (i). In einer weiteren Ausführungsform der Erfindung können dem Monomer der Gruppe (i) geringe Mengen Cyclohexylmethacrylat, Isobornylacrylat und/oder Isobornylmethacrylat zugesetzt werden.

Als Monomer der Gruppe (ii) werden Monomere bevorzugt, die ausgewählt sind aus der Gruppe bestehend aus (Meth)Acrylsäureestern umfassend eine 2-Formyl-3-methylphenoxy- oder eine 4-Benzoyl-2,5-dimethylphenoxy-Gruppe. Besonders bevorzugte Beispiele sind 2-(2'-Formyl-3'-methylphenoxy)ethylacrylat, 2-(2'-Formyl-3'-methylphenoxy)ethylmethacrylat, 2-(4'-Benzoyl-2',5'-dimethylphenoxy)ethylacrylat und 2-(4'-Benzoyl-2',5'-dimethylphenoxy)ethylmethacrylat.

Das Monomer der Gruppe (iii) wird bevorzugt ausgewählt aus der Gruppe bestehend aus Maleinsäureanhydrid, Itaconsäureanhydrid, Glycidylmethacrylat, Hydroxyethylacrylat, 4-Hydroxybutylacrylat, Benzylacrylat, Benzylmethacrylat, Phenylacrylat, Phenylmethacrylat, tert-Butylphenylacrylat, tert-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat sowie Tetrahydrofurfurylacrylat, und weiteren aromatischen Vinylverbindungen. Diese weiteren aromatischen Vinylverbindungen verfügen bevorzugt über 4-18 Kohlenstoffatome in ihrer aromatischen Einheit und können Heteroatome enthalten. Besonders bevorzugte Beispiele hierfür sind Styrol, 4-Vinylpyridin, N-Vinylpyrollidon, N-Vinylphthalimid, Methylstyrol und 3,4-Dimethoxystyrol.

Das erfindungsgemäße Verfahren zur Herstellung der ersten Polymerzusammensetzung umfasst
(a) die Bereitstellung der hierin beschriebenen Monomerzusammensetzung; und
(b) die radikalische Polymerisation dieser Zusammensetzung.

Erfindungsgemäß kann die radikalische Polymerisation als freie oder kontrollierte radikalische Polymerisation in üblichen Polymerisationsreaktoren durchgeführt werden. Solche Reaktoren verfügen im Allgemeinen über eine Rühreinheit, mehrere Zulaufgefäße, Rückflusskühler, Heiz- und Kühlvorrichtungen, und sie sind für das Arbeiten unter Inertgasatmosphäre (bevorzugt Stickstoff) sowie unter Über- oder Unterdruck geeignet. Die radikalische Polymerisation kann in Gegenwart eines oder mehrerer organischer Lösungsmittel und/oder in Gegenwart von Wasser oder in Substanz, d.h. in Abwesenheit von Lösungsmitteln durchgeführt werden. Erfindungsgemäß wird hierbei die verwendete Lösungsmittelmenge so gering wie möglich gehalten. Die Polymerisationszeit beträgt bevorzugt zwischen 6 und 48 Stunden, besonders bevorzugt zwischen 10 und 24 Stunden.

In einer bevorzugten Ausführungsform der Erfindung beträgt das mittels Gelpermeationschromatographie (Messmethode A2) bestimmte gewichtsmittlere Molekulargewicht Mw der Polymere in der ersten Polymerzusammensetzung zwischen 300.000 und 2.000.000 g/mol, bevorzugt zwischen 600.000 und 1.200.000 g/mol.

Als Lösungsmittel kommen in einer Lösungsmittelpolymerisation bevorzugt Ester gesättigter Carbonsäuren (z.B. Ethylacetat), aliphatische Kohlenwasserstoffe (bspw. n-Hexan oder n-Heptan), Ketone (wie Aceton oder Methylethylketon), Siedegrenzbenzin oder Gemische dieser Lösungsmittel zum Einsatz. Besonders bevorzugt wird ein Lösungsmittelgemisch aus Aceton und Isopropanol eingesetzt, wobei der Isopropanolgehalt zwischen 1 und 10 Gew.-% der Lösungsmittelmischung beträgt.

In dem erfindungsgemäßen Verfahren werden bevorzugt Polymerisationsinitiatoren verwendet. Als geeignete Initiatoren werden herkömmliche radikalbildende Verbindungen, bspw. Peroxide oder Azoverbindungen, eingesetzt. Es können ferner Initiatorgemische verwendet werden. Zur Einstellung eines niedrigen Molekulargewichts und zur Verringerung der Polydispersität können darüberhinaus Regler-Additive, bevorzugt Thiole, Alkohole und/oder Ether eingesetzt werden.

Die bei dieser radikalischen Polymerisation verwendeten Monomere der Gruppen (i), (ii) und (iii) werden dabei bevorzugt so gewählt, dass die erste Polymerzusammensetzung auch als thermisch vernetzbare Acrylatzusammensetzung eingesetzt werden könnte. Bevorzugt wird die Art der einzelnen Comonomere, d.h. der Monomere der Gruppen (i), (ii) und (iii) so gewählt, dass die Glasübergangstemperatur T_{G,A} (bestimmt nach der DSC-Methode) der Polymere in der ersten Polymerzusammensetzung unterhalb der Anwendungstemperatur, bevorzugt unterhalb von 15°C liegt.

Die Polymere der ersten Polymerzusammensetzung, d.h. der Polymerzusammensetzung, die nach dem beschriebenen Verfahren erhältlich ist, enthalten aufgrund der Monomereinheiten (ii) ortho-Alkylphenylketon- bzw. ortho-Alkylphenylaldehydgruppen, die mittels UV-Bestrahlung, wie hierin beschrieben, zu ortho-Chinodimethan-Einheiten (Photoenole) isomerisierbar sind. Bei diesen ortho-Chinodimethan-Einheiten handelt es sich um hochreaktive Diene, die mit Dienophilen eine Diels-Alder- bzw. eine Hetero-Diels-Alder-Reaktion eingehen können.

Überraschenderweise hat sich gezeigt, dass die radikalische Polymerisation der hierin beschrieben Monomerzusammensetzung die Reaktivität dieser funktionellen Gruppen nicht beeinträchtigt, und dass die genannten Gruppen auch nach längeren Heißschmelz-Schritten nicht zersetzt werden. Das bedeutet, dass die Polymere der ersten Polymerzusammensetzung der vorliegenden Erfindung mit üblichen Dienophilen in einer Diels-Alder- oder Hetero-Diels-Alder-Reaktion umgesetzt werden können.

Als Dienophile kommen die für Diels-Alder- und Hetero-Diels-Alder-Reaktionen typischen Dienophile in Betracht. Bevorzugt kommen Alkene, Alkine, Nitrile, Imine, Azoverbindungen, Carbonylverbindungen und/oder Dithioester infrage. Besonders bevorzugt werden als Dienophile Alkene eingesetzt, besonders bevorzugt Maleimide oder Acrylsäureester oder Dithioester.

So wird die erste Polymerzusammensetzung bevorzugt in Form einer Reaktivzusammensetzung umfassend 50 bis 99,9 Gew.-%, bevorzugt 50 bis 99,8 Gew.-%, besonders bevorzugt 50 bis 99,7 Gew.-% der ersten Polymerzusammensetzung sowie 0,1 bis 15 Gew.-%, bevorzugt 0,2 bis 12 Gew.-%, besonders bevorzugt 0,3 bis 10 Gew.-% eines Dienophils und optional bis zu 49,9 Gew.-% an Additiven bereitgestellt.

Bevorzugte Dienophile sind niedermolekulare oder polymere Vernetzer mit mindestens zwei Dienophil-Funktionalitäten. Alternativ kann eine Vernetzung herbeigeführt werden, indem eine freie Dienophil-Einheit, bspw. eines Acrylsäureesters, in den Polymerseitenketten der Polymere der ersten Polymerzusammensetzung als Reaktionspartner für das ortho-Methylphenylketon bzw. das ortho-Methylphenylaldehyd nach dessen Umwandlung in ein Photoenol in einer Diels-Alder- bzw. Hetero-Diels-Alder-Reaktion zum Einsatz kommt.

Besonders bevorzugte niedermolekulare und polymere Vernetzer mit wenigstens zwei Dienophil-Funktionalitäten werden ausgewählt aus der Gruppe der Verbindungen V und VI:

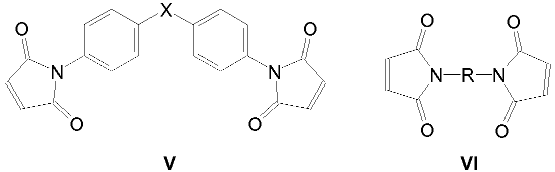

In den Bismaleimid-Strukturen V und VI steht X für eine Bindung, Sauerstoff, C=O, SO₂, CH₂, Ether- oder Polyetherreste, Ester- oder Polyesterreste, oder eine aromatische Gruppe; und R beschreibt primäre, sekundäre oder tertiäre Alkylreste, oder Ether- oder Polyetherreste, oder Ester- oder Polyesterreste. Besonders bevorzugte Beispiele, kommerziell verfügbarer Bismaleimide sind 1,4-Di(maleido)butan, *N,N'*-(4-Methyl-1,3-phenylen)bismaleimid, *N,N'-*(1,3-Phenylen)dimaleimid, *N,N'-*(1,4-Phenylen)dimaleimid, 1,1'-(Methylendi-4,1-phenylen)bismaleimid und 1,1'-(3,3'-Dimethyl-1,1'-biphenyl-4,4'-diyl)bismaleimid.

Zur Vernetzung der ersten Polymerzusammensetzung geeignete, bevorzugte Acrylsäureester sind 1,6-Hexandioldiacrylat (HDDA), Trimethylpropantriacrylat, Pentaerithrytoltriacrylat, Pentaerithrytoltetraacrylat und Dipentaerithrytolhexaacrylat, sowie Oligomere und Polymere basierend auf Ethylen- und Propylenglykol- (z.B. der Firma Polyscience Inc.), Polyether- (z.B. erhältlich unter dem Handelsnamen Laromer® der Firma BASF SE), Polyester- (z.B. erhältlich unter dem Handelsnamen Laromer® der Firma BASF SE), Polyamid-, Polyurethan- (z.B. erhältlich unter dem Handelsnamen Desmolux® der Firma Bayer) und Polysiloxanstrukturen (z.B. der Firma Gelest).

Bevorzugte Dithioester-basierte Dienophile umfassen mindestens zwei Dithioester-Funktionalitäten der folgenden allgemeinen Struktur (VII) 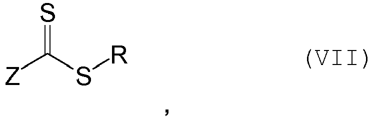 wobei S jeweils ein Schwefelatom darstellt, Z und R jeweils unabhängig voneinander gewählt sind und Z ein Rest aus einer der Gruppen i) bis v) ist, und R ein Rest aus einer der Gruppen i) bis iii) ist, unter der Maßgabe, dass die Gruppe R mit einer weiteren Z-C(=S)-S- Einheit substituiert ist, oder dass die Gruppe Z mit einer weiteren -C(=S)-S-R Einheit substituiert ist, wobei zwei Gruppen Z bzw. zwei Gruppen R innerhalb des Dienophils (VII) unabhängig von einander ausgewählt sind, und wobei:
i) C₁-C₁₈-Alkyl-, C₂-C₁₈-Alkenyl-, C₂-C₁₈-Alkinyl-, jeweils linear oder verzweigt; Aryl-, Phenyl-, Benzyl-, aliphatische und aromatische Heterocyclen umfasst; und
ii) -NH₂, -NHR¹, -NR¹R², -NH-C(O)-R¹, -NR¹-C(O)-R², -NH-C(S)-R¹, -NR¹-C(S)-R², 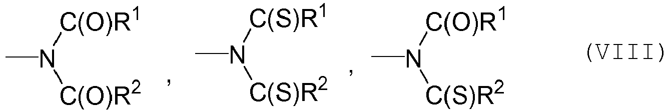 umfasst, wobei R¹ und R² unabhängig voneinander gewählte Reste aus der Gruppe i) sind; und
iii) -S-R³ oder -S-C(S)-R³ ist, wobei R³ ein Rest gewählt aus einer der Gruppen i) oder ii) ist; und
iv) -O-R³ oder -O-C(O)-R³ darstellt, wobei R³ ein Rest ist ausgewählt aus einer der Gruppen i) oder ii); und
v) -P(O)-(OR¹)₂ ist, wobei R¹ ein Rest ist, der ausgewählt ist aus der Gruppe i).

In einer vorteilhaften Ausführungsform der Erfindung können der Reaktivzusammensetzung ferner klebrigmachende Harze mit einem prozentualen Anteil von bis zu 49,9 Gew.-% bezogen auf die Gesamtzusammensetzung zugesetzt werden. Hierzu sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- und andere Kohlenwasserstoffharze. Beliebige Kombinationen dieser und weiterer Harze können eingesetzt werden, um die Eigenschaften der resultierenden Zusammensetzung wunschgemäß einzustellen.

Optional können auch pulver- und granulatförmige Füllstoffe, Farbstoffe und Pigmente, besonders auch abrasive und verstärkende Additive, wie z.B. Aerosile (pyrogene Kieselsäuren), verwendet werden.

Weiterhin optional kann die erste Polymerzusammensetzung auch mit anderen Polymeren gemischt werden. Hierzu eignen sich Polymere auf Basis von Naturkautschuk, Synthesekautschuk, Ethylvinylacetat (EVA), Siliconkautschuk, Acrylkautschuk und Polyvinylether.

Optional können ferner herkömmliche Weichmacher, insbesondere in Konzentrationen von bis zu 5 Gew.-%, zugesetzt werden. Als Weichmacher können beispielsweise niedermolekulare Polyacrylate, Phthalate, wasserlösliche Weichmacher, Weichharze, Phosphate, Polyphosphate, Adipate und/oder Citrate eingesetzt werden.

Ferner können auch Vernetzersubstanzen zugesetzt werden, die eine thermische Vernetzung der Polymerzusammensetzungen begünstigen, sofern eine Steigerung der Kohäsion der Polyacrylatzusammensetzung durch eine zusätzliche, thermische Vernetzung gewünscht wird. Als Vernetzer eigenen sich bspw. Metallchelate, multifunktionelle Isocyanate, multifunktionelle Amine, multifunktionelle Epoxide, multifunktionelle Aziridine, multifunktionelle Oxazoline sowie multifunktionelle Carbodiimide.

Die erfindungsgemäße erste Polymerzusammensetzung wird zur weiteren Verarbeitung also bevorzugt mit den optionalen Additiven vermischt und bevorzugt als Heißschmelzmasse (hot melt), bevorzugt als Reaktivzusammensetzung auf einen Träger (bspw. aus Polypropylen, BOPP, Polyethylenterephthalat, Vlies, PVC, Polyester oder in Form eines Polyolefin-, Polyacrylat- oder Polyurethanschaumes) oder auf ein Trennpapier (bspw. Glassine, HDPE, LDPE) aufgetragen oder umlaminiert.

Obwohl die ortho-Alkylphenylketon- und die ortho-Alkylphenylaldehyd funktionellen Gruppen sowohl innerhalb der ersten Polymerzusammensetzung als auch innerhalb der Reaktivzusammensetzung selbst unter Heißschmelz-Bedingungen bei Temperaturen von bis zu 180°C über lange Zeiträume von bis zu einer Stunde stabil sind, kann zur Erhöhung der Lebensdauer der hierin beschriebenen Zusammensetzungen ein Ausschluss von Licht, insbesondere von UV-Licht für Lagerzwecke sinnvoll sein. Ferner hat sich gezeigt, dass die Lebensdauer der Photoenole während der Bestrahlung mit UV-Licht weiter erhöht werden kann, wenn Substanzen wie Pyridin oder 2,6-Dimethylphenol, zur Steigerung der Photonenquantenausbeute zugegeben werden.

Die UV-Vernetzung findet bevorzugt direkt auf dem beschriebenen Träger oder Trennpapier statt.

Die hierin beschriebene Monomerzusammensetzung eignet sich hervorragend zur einfachen Bereitstellung einer ersten Polymerzusammensetzung, die selbst unter verschärften Bedingungen wie erhöhten Temperaturen und dem Einsatz hoher Scherkräfte vernetzbar bleibt, und die auch nach der Vernetzung in einer Diels-Alder- bzw. Hetero-Diels-Alder-Reaktion so gut wie nicht oder überhaupt nicht zu einer Vergelung führt. Die Vernetzung der hierin beschriebenen ersten Polymerzusammensetzung mit einem Dienophil ist dabei auch mit geringem Energieaufwand in Form von UV-Strahlung geringer Intensität möglich, wodurch eine gleichmäßige Vernetzung unterschiedlicher Schichtdicken erlaubt wird. Die Erfinder gehen davon aus, dass hierfür die Lebensdauer des angeregten Zustandes der UV-aktivierbaren Gruppen verantwortlich ist. Da die UV-aktivierbaren Gruppen an das Polymerrückgrad der Polymere innerhalb der ersten Polymerzusammensetzung gebunden sind, wird eine Migration der zur Vernetzung benötigten Funktionalitäten unterbunden. Ferner führt die Vernetzung auch zu keiner homo- oder heterolytischen Bindungsspaltung, bei der Molekülfragmente freigesetzt würden, und die Vernetzung verläuft selektiv, so dass der Vernetzungsgrad der Polymerzusammensetzung gezielt eingestellt werden kann.

Im Folgenden wird die Erfindung anhand von Beispielen näher erläutert, ohne die Erfindung damit zu beschränken.

### Experimenteller Teil

Die folgenden beispielhaften Experimente sollen die Erfindung näher erläutern, ohne dass durch die Wahl der angegebenen Beispiele die Erfindung unnötig eingeschränkt werden soll.

### Messmethoden (allgemein):

### K-Wert (nach Fikentscher) (Messmethode A1):

Der K-Wert ist ein Maß für die durchschnittliche Molekülgröße hochpolymerer Stoffe. Zur Messung wurden einprozentige (1g/100 mL) toluolische Polymerlösungen hergestellt und mit Hilfe eines Vogel-Ossag-Viskosimeters deren kinematische Viskositäten bestimmt. Nach Normierung auf die Viskosität des Toluols wird die relative Viskosität erhalten, aus der sich nach Fikentscher der K-Wert errechnen lässt (Polymer 1967, 8, 381 ff.)

### Gelpermeationschromatographie GPC (Messmethode A2):

Die Angaben des gewichtsmittleren Molekulargewichtes M_{w} und der Polydispersität PD in dieser Schrift beziehen sich auf die Bestimmung per Gelpermeationschromatographie. Die Bestimmung erfolgt an 100 µL klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, 10³ Å, ID 8,0 mm x 50 mm verwendet. Zur Auftrennung werden die Säulen des Typs PSS-SDV, 5 µ, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung).

### Bestimmung des Gelanteils (Messmethode A3):

Die sorgfältig getrockneten lösungsmittelfreien Klebstoffproben werden in ein Vliestütchen aus Polyethylen (Tyvek-Vlies) eingeschweißt. Aus der Differenz der Probengewichte vor und nach Extraktion durch Ethylacetat wird der Gelwert, also der nicht in Toluol lösliche Gewichtsanteil des Polymers bestimmt. Additive, wie beispielsweise Harze, die auch nach UV-Bestrahlung nicht in das Netzwerk eingebaut werden, müssen vom Gesamtprobengewicht vor der Extraktion subtrahiert werden.

### ¹H-Kernresonanzspektroskopie ¹H-NMR (Messmethode A4)

¹H-NMR-Spektroskopie wurde an einem Bruker AM 400 MHz Spektrometer durchgeführt. Die Proben wurden in CDCl₃ gelöst. Als interner Standar wurde Tetramethylsilan verwendet.

### Messmethoden (Haftklebemassen):

### 180° Klebkrafttest (Messmethode H1):

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg für eine Minute auf das Substrat aufgedrückt. Hierzu wurde ein walzenförmiges Gewicht zweimal über den Haftklebestreifen geführt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.

Die Messergebnisse sind in N/cm angegeben und sind gemittelt aus drei Messungen.

### Scherstandzeit (Haftklebemasse auf PET-Folie, Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg für eine Minute auf den Stahlträger gedrückt. Hierzu wurde ein walzenförmiges Gewicht viermal über den Haftklebestreifen geführt. Diese Probe wurde senkrecht aufgehängt, so dass das überstehende Ende des Klebebandes nach unten zeigt.

Bei Raumtemperatur wurde ein Gewicht von 1 kg an dem überstehenden Ende des Klebebandes befestigt. Die Messung wird bei Normalklima (23 °C +/- 1 °C, 55 % +/- 5 % Luftfeuchtigkeit) und bei 70 °C in einem Wärmeschrank durchgeführt, wobei für diese Messung die Probe mit einem Gewicht von 0,5 kg belastet wurde.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

### Kommerziell erhältliche, eingesetzte Chemikalien

| *Chemische Verbindung* | *Handelsname* | *Hersteller* | *CAS-Nr.* |
|---|---|---|---|
| 2-Bromethanol | - | Sigma-Aldrich | 540-51-2 |
| Acrylsäurechlorid | - | Merck KGaA | 814-68-6 |
| Triethylamin | - | Sigma-Aldrich | 121-44-8 |
| 2,2'-Azobis(2-methylbutyronitril) | Vazo® 67 | DuPont | 13472-08-7 |
| Bis-(4-*tert-*butylcyclohexyl)peroxyd icarbonat | Perkadox® 16 | Akzo Nobel | 15520-11-3 |
| 1,1'-(Methylendi-*p-*phenylen)bismaleimid | - | Sigma-Aldrich | 13676-54-5 |
| Bis(maleimido)hexan | BMH | Pierce Biotechnol ogy | 4856-78-5 |
| Polyesteracrylat | Laromer® LR 8981 | BASF SE | - |
| Urethanacrylat | Desmolux® XP 2740 | Bayer Material Science | - |
| UV-vernetzbare Acrylat-Hotmelt-Haftklebemasse (K-Wert 48 - 52) | acResin® A 260 UV | BASF SE | - |
| Terpenphenolharz (Erweichungspunkt 110 °C; M_{w} = 500 - 800 g/mol; D = 1,50) | Dertophene® T110 | DRT resins | 25359-84-6 |
| Harnstoff-Aldehyd-Harz (Schmelzbereich 80 - 95 °C) | Laropal® A 81 | BASF SE | 28211-77-0 |

| | | | |
|---|---|---|---|
| alle Spezifikationsangaben bei 20 °C, Messung des K-Wertes gemäß Messmethode Al. | | | |

### Herstellung von Acrylatmonomeren mit ortho-Methylphenylketon- oder -aldehydfunktionalität (Monomer der Gruppe (ii))

### Synthese von 2-Hydroxy-6-methylbenzaldehyd (1)

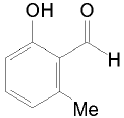

Die Synthese von 2-Hydroxy-6-methylbenzaldehyd erfolgte gemäß der Synthesevorschrift in Angew. Chem. 2013, 125, 791 - 796.

### Synthese von 2-((2-Hydroxyethyl)oxy)-6-methylbenzaldehyd (2)

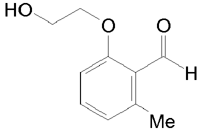

Zu einer Suspension von K2CO3 (5,9 g, 42,7 mmol) in 78 mL wasserfreiem DMF wurden 13,6 g (100 mmol) 2-Hydroxy-6-methylbenzaldehyd gegeben und 30 Minuten bei Raumtemperatur (20 °C) gerührt. Anschließend wurde eine Lösung aus 10,1 g 2-Bromethanol (81,9 mmol) in 30 mL wasserfreiem DMF tropfenweise innerhalb von 30 Minuten zugegeben. Nach weiteren 72 h Rühren wurde die Reaktion durch die Zugabe von 750 mL Wasser gequencht. Die Mischung wurde dreimal mit Diethylether extrahiert und die kombinierten organischen Phasen wurden anschließend mit 5 %iger Natronlauge (2 x 750 mL) und Wasser (2 x 1000 mL) gewaschen. Die organische Phase wurde über MgSO₄ getrocknet, das Lösungsmittel im Vakuum entfernt und der Rückstand säulenchromatographisch über Kieselgel (Cyclohexan:Ethylacetat, 2:1) gereinigt. Das Produkt wurde als gelbliches Öl mit einer Ausbeute von 54% (6,6 g, 36,9 mmol) erhalten.
¹H-NMR (CDCl₃, 400 MHz, Messmethode A4) δ (ppm) = 10,67 (s, 1H, C*HO*) , 7,34 (t, ³*J* = 7,9 Hz, 1H, Ar*H*) , 6,80 (t, ³*J* = 8, 2 Hz, 2H, Ar*H*), 4,03 (t, ³*J* = 6,3 Hz, 2H, OC*H₂*), 3, 64 (t, ³*J* = 6,6 Hz, 2H, HOC*H₂*), 2,57 (s, 3H, C*H₃*)*.*

### Synthese von 2-(2'-Formyl-3'-methylphenoxy)ethylacrylat

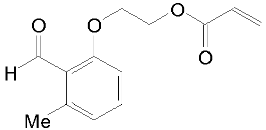

10,0 g (73,5 mmol) 2-((2-Hydroxyethyl)oxy)-6-methylbenzaldehyd wurden in 400 mL Chloroform gelöst. Anschließend wurden bei Raumtemperatur (20 °C) 13,3 g (147,0 mmol) Acrylsäurechlorid und nach weiterem fünfminütigen Rühren 18,6 g (183,8 mmol) Triethylamin zu der Lösung gegeben. Die Reaktionsmischung wurde für 16 h bei Raumtemperatur gerührt und anschließend das Lösungsmittel im Vakuum entfernt. Der Rückstand wurde erneut in Ethylacetat aufgenommen und über Silicagel filtriert, um die Ammoniumsalze zu entfernen. Der Rückstand wurde säulenchromatographisch über Silicagel (Hexan:Ethylacetat, 2:1) gereinigt. Das Produkt wurde als hochviskoses, gelbliches Öl mit einer Ausbeute von 94% (16,2 g, 69,1 mmol) erhalten. ¹H-NMR (CDCl₃, 400 MHz, Messmethode A4) δ (ppm) = 10,32 (s, 1H, C*H*O), 7,38 (t, ³*J* = 7,9 Hz, 1H, Ar*H*), 6,76 (dd, *J* = 25, 3; 7,9 Hz, 2H, Ar*H*), 6, 65 (dd, *J* = 17, 3; 1, 3 Hz, 1H, -CH=C*H₂*), 6,37 (dd, *J* = 17,3; 10,4 Hz, 1H, -C*H*=CH₂), 6,05 (dd, *J* = 10,4; 1,3 Hz, 1H, -CH=C*H₂*), 4, 32 - 4,29 (m, 2H, -O-CH₂-C*H₂*-OCO), 3,75 - 3,71 (m, 2H, -O-C*H₂*-CH₂-OCO), 2,61 (s, 3H, C*H₃*).

### Synthese von 2-(4'-Benzoyl-2',5'-dimethylphenoxy)ethylacrylat

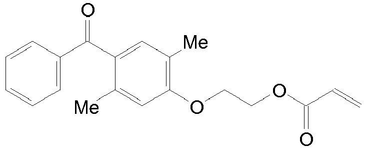

Die Synthese (2-(4'-Benzoyl-2',5'-dimethylphenoxy)ethylacrylat erfolgte gemäß der Synthesevorschrift in Macromolecules 2012, 45, 5012 - 5019.

### Herstellung der Basispolymere P1 bis P4 ("erste Polymerzusammensetzungen")

Im Folgenden wird die Herstellung der Basispolymere beschrieben.

### Beispiel Basispolymer P1:

Ein für radikalische Polymerisationen konventioneller 200 L-Glasreaktor wurde mit 2,4 kg Acrylsäure (AS, 3 %), 38,0 kg 2-Ethylhexylacrylat (EHA, 47,5 %), 38,0 kg Butylacrylat (BA, 47,5 %), 1,6 kg 2-(2'-Formyl-3'-methylphenoxy)ethylacrylat (2 %) und 53,3 kg Aceton/ Benzin 60/95 (1:1) befüllt. Nach 45minütiger Durchleitung von Stickstoffgas unter Rühren wurde der Reaktor auf 58 °C hochgeheizt und 0,8 kg Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,8 kg Vazo® 67 hinzugegeben. Über einen Zeitraum von weiteren 5 h wurde jeweils stündlich je nach Viskositätsanstieg mit jeweils 5,0 bis 10,0 kg Benzin 60/95 verdünnt. Zur Reduktion der Restmonomere wurden nach 6 und nach 7 h ab Reaktionsbeginn jeweils 1,5 kg Bis-(4-tert-butylcyclohexyl)peroxydicarbonat hinzugegeben und zwischendurch noch mit 15 kg Benzin 60/95 verdünnt. Die Reaktion wurde nach 24 h Reaktionszeit abgebrochen und auf Raumtemperatur abgekühlt.

### Basispolymere P 2 bis P 4

Die Herstellung der Basispolymere P2 bis P4 erfolgte analog dem Beispiel P1. Die prozentualen Massenangaben der jeweils verwendeten Monomere sind in Tabelle 1 aufgeführt.

**Tabelle 1: Basispolymere P2 bis P4**

| | **AS** | **BA** | **EHA** | **2-(2'-Formyl-3'-methylphenoxy)-ethylacrylat** | **2-(4'-Benzoyl-2',5'-dimethylphenoxy)-ethylacrylat** |
|---|---|---|---|---|---|
| **P2** | 3,0 % | 46,0 % | 46,0 % | 5,0 % | - |
| **P3** | 5,0 % | 60, % | 30, % | - | 5, 0 % |
| **P4** | 5, 0 % | 56,7 % | 23,3 % | - | 10,0 % |

In Tabelle 2 sind jeweils die mittels GPC gemessenen Molmassenverteilungen der Basispolymere P1 bis P4 dargestellt.

**Tabelle 2: GPC-Daten der Basispolymere P1 bis P4**

| | Mₙ [g/mol]^{a)} | M_{w} [g/mol]^{a)} | PD [-]^{a)} |
|---|---|---|---|
| **P 1** | 64.800 | 870.000 | 13,4 |
| **P 2** | 66.900 | 850.000 | 12,7 |
| **P 3** | 68.500 | 620.000 | 9,1 |
| **P 4** | 68.100 | 605.000 | 8, 9 |

| | | | |
|---|---|---|---|
| ^{a)} Gemessen nach Messmethode A2. | | | |

### Herstellung der Haftklebemassen PSA1 bis PSA14 ("vernetzte Polymerzusammensetzungen") sowie der Vergleichsbeispiele VPSA15 bis VPSA19

Im Folgenden wird die Präparation der Haftklebemassen beschrieben. Zur UV-Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die beschichteten Muster wurden jeweils mit einer Geschwindigkeit von 20 m/min durch die Anlage bewegt, wobei zur Erhöhung der Bestrahlungsdosis die Muster in mehreren Durchgängen bestrahlt wurden.

### Beispiel PSA1

Basispolymer P1 wurde wie zuvor erhalten mit 0,3 Gewichtsanteilen Laromer® LR 8981 entsprechend 0,3 Gew.-% Feststoffgehalt der Lösung abgemischt und anschließend in einem Einschneckenextruder (Fa. Berstorff) aufkonzentriert. Die Drehzahl der Schnecke betrug 160 U/min, es wurde ein Durchsatz von 55 kg/h realisiert. Zur Aufkonzentration wurde an drei verschiedenen Domen ein Vakuum angelegt. Die Unterdrücke betrugen jeweils 130 mbar, 75 mbar und 60 mbar, wobei das geringste Vakuum im ersten Dom angelegt wurde. Die Austrittstemperatur des aufkonzentrierten Hotmelts lag bei 130°C, so dass der Restlösemittelgehalt unter 0.2 Gew.-% lag. Zur Beschichtung wurden die Stränge in einer Breitschlitzdüse (Fa. Pröls) aufgeschmolzen. Nach Temperierung bei 120 °C für 1 h wurde auf eine 23 µm dicke und mit einem Saran-Primer versehene PET-Folie beschichtet. Es wurden zwei Muster mit unterschiedlichen Masseaufträgen von 50 g/m² und 150 g/m² hergestellt. Die Klebebandmuster wurden dann mit 1 bis 2 Durchgängen an der UV-Anlage bestrahlt. Zur Ermittlung der Effizienz der Vernetzung wurde jeweils Testmethode A3 durchgeführt. Zur Überprüfung der klebtechnischen Eigenschaften wurden die Testmethode H1 und H2 angewandt. Die Ergebnisse sind in Tabelle 4 dargestellt.

### Beispiele PSA2 bis PSA14

Die Herstellung der Beispiele PSA2 bis PSA14 erfolgte analog dem Beispiel PSA1. Die prozentualen Massenangaben der jeweils verwendeten Vernetzer oder weiteren Additive wie beispielsweise Klebharze sind in Tabelle 3 aufgeführt. Die jeweils verwendete Dosis (angegeben in der Anzahl an Durchläufen) sowie die klebtechnischen Eigenschaften sind in Tabelle 4 dargestellt.

### Vergleichsbeispiele VPSA15 bis VPSA19

Die Herstellung der Beispiele VPSA15 bis VPSA19 erfolgte analog dem Beispiel PSA1. Für die Beispiele VPSA16 bis VPSA19 wurde als Basismasse die UV-vernetzbare Polyacrylat-Hotmelt-Haftklebemasse acResin® A 260 UV verwendet. Die prozentualen Massenangaben der jeweils verwendeten Vernetzer oder weiteren Additive wie beispielsweise Klebharze sind in Tabelle 3 aufgeführt. Die jeweils verwendete Dosis (angegeben in der Anzahl an Durchläufen) sowie die klebtechnischen Eigenschaften sind in Tabelle 4 dargestellt.

**Tabelle 3: Beispiele PSA2 bis PSA14 sowie der Vergleichsbeispiele VPSA15 bis VPSA19**

| **Bsp.** | Basispolymer | Vernetzer ^{a)} | Vernetzermenge [Gew.anteil] | Additiv | Additivmenge [Gew.anteil] |
|---|---|---|---|---|---|
| **PSA2** | P1 | Laromer | 0,7 | - | - |
| **PSA3** | P1 | Desmolux | 0,25 | - | - |
| **PSA4** | P1 | Laromer | 0,5 | DT110 | 30 |
| **PSA5** | P1 | Laromer | 0,25 | Laropa 1 | 30 |
| **PSA6** | P2 | Laromer | 0,4 | - | - |
| **PSA7** | P2 | Desmolux | 0,4 | - | - |
| **PSA8** | P3 | BMH | 0,2 | - | - |
| **PSA9** | P3 | BMH | 0,5 | - | - |
| **PSA10** | P3 | BMMDP | 0,2 | - | - |
| **PSA11** | P3 | BMMDP | 0,4 | DT110 | 30 |
| **PSA12** | P3 | BMMDP | 0,4 | Laropa 1 | 30 |
| **PSA13** | P4 | BMH | 0,15 | - | - |
| **PSA14** | P4 | BMMDP | 0,15 | - | - |
| **VPSA15** | P1 | - | - | - | - |
| **VPAS16** | acResin | - | - | - | - |
| **VPSA17** | acResin | Laromer | 0,4 | - | - |
| **VPSA18** | acResin | - | - | DT110 | 30 |
| **VPSA19** | acResin | - | - | Laropa 1 | 30 |

| | | | | | |
|---|---|---|---|---|---|
| ^{a)} Laromer = Laromer LR 8981; Desmolux = Desmolux XP 2740; BMH = Bis(maleido)hexan; BMMDP = 1,1'-(Methylendi-p-phenylen)bismaleimid DT110 = Terpenphenolharz Dertophene T 110, Laropal = Laropal A 81; acResin = UV-vernetzbare Polyacrylathaftklebemasse acResin A 260 UV. | | | | | |

**Tabelle 4: Klebtechnische Daten der Beispiele PSA1 bis PSA14 sowie der Vergleichsbeispiele VPSA15 bis VPSA19**

| **Bsp.** | Masseauftrag [g/m²] | UV-Dosis [Anzahl Durchläufe] | Gelwert [%]^{a)} | KK Stahl [N/cm]^{b)} | SSZ RT [min]^{c)} |
|---|---|---|---|---|---|
| **PSA1a** | 50 | 1 | 65 | 5,25 | 1280 |
| **PSA1b** | 150 | 2 | 52 | 6,03 | 800 |
| **PSA2a** | 50 | 1 | 84 | 4,80 | 5680 |
| **PSA2b** | 150 | 2 | 72 | 5,36 | 1900 |
| **PSA3a** | 50 | 1 | 66 | 5,36 | 1600 |
| **PSA3b** | 150 | 2 | 52 | 6,24 | 1003 |
| **PSA4a** | 50 | 1 | 58 | 7,56 | 2200 |
| **PSA4b** | 150 | 3 | 41 | 8,99 (K) | 860 (K) |
| **PSA5a** | 50 | 1 | 61 | 7,12 | 2180 |
| **PSA5b** | 150 | 2 | 53 | 8,57 | 920 |
| **PSA6a** | 50 | 1 | 79 | 3,80 | 3560 |
| **PSA6b** | 150 | 1 | 57 | 4,58 | 1140 |
| **PSA7a** | 50 | 1 | 81 | 3,99 | 4570 |
| **PSA7b** | 150 | 1 | 62 | 4,62 | 1200 |
| **PSA8a** | 50 | 1 | 67 | 5,12 | 1760 |
| **PSA8b** | 150 | 2 | 59 | 5,89 | 960 |
| **PSA9a** | 50 | 1 | 86 | 4,56 | 4800 |
| **PSA9b** | 150 | 2 | 69 | 5,44 | 1300 |
| **PSA10a** | 50 | 1 | 64 | 5,63 | 1700 |
| **PSA10b** | 150 | 2 | 54 | 6,23 | 1000 |
| **PSA11a** | 50 | 1 | 69 | 7,52 | 3450 |
| **PSA11b** | 150 | 3 | 53 | 8,12 | 1020 |
| **PSA12a** | 50 | 1 | 70 | 7,49 | 3720 |
| **PSA12b** | 150 | 2 | 53 | 8,22 | 1130 |
| **PSA13a** | 50 | 1 | 82 | 3,56 | > 10000 |
| **PSA13b** | 150 | 2 | 71 | 4,32 | 6230 |
| **PSA14a** | 50 | 1 | 83 | 3,99 | > 10000 |
| **PSA14b** | 150 | 2 | 69 | 4,52 | 5800 |
| **VPSA15a** | 50 | 4 | 6 | 6,23 (K) | < 10 (K) |
| **VPSA15b** | 150 | 4 | 5 | 6,52 (K) | < 10 (K) |
| **VPSA16a** | 50 | 1 | 52 | 4,23 | 960 |
| **VPSA16b** | 150 | 3 | 32 | 5,65 (K) | 120 (K) |
| **VPSA17a** | 50 | 1 | 51 | 4,42 | 860 (K) |
| **VPSA17b** | 150 | 3 | 31 | 4,98 (K) | 750 (K) |
| **VPSA18a** | 50 | 2 | 39 | 6,23 | 850 |
| **VPSA18b** | 150 | 3 | 22 | 6,45 (K) | 163 (K) |
| **VPSA19a** | 50 | 2 | 44 | 5,89 | 1100 |
| **VPSA19b** | 150 | 3 | 36 | 6,23 | 750 (K) |

| | | | | | |
|---|---|---|---|---|---|
| ^{a)} Messmethode A3; ^{b)} Messmethode H1, KK = Klebkraft; ^{c)} Messmethode H2, SSZ = Scherstandszeit, RT = Raumtemperatur; sofern keine Angaben zum Ablösemechanismus gegeben sind, handelt es sich um einen Adhäsionsbruch, ansonsten K = Kohäsionsbruch . | | | | | |

Anhand der erfindungsgemäßen Beispiele ist deutlich zu erkennen, dass die photoinduzierte Diels-Alder-Reaktion zwischen polymergebundenen Photoenolfunktionalitäten und einem Vernetzer umfassend mindestens eine als Dienophil reagierende funktionelle Gruppe im Vergleich zu kommerziell verfügbaren, mit ebenfalls polymergebundenen und über einen Norrish Typ II-Mechanismus reagierenden funktionellen Gruppen (VPSA16 und 17) insbesondere zur Vernetzung von Haftklebemassen mit höheren Masseaufträgen geeignet ist. Weiterhin ist zu erkennen, dass auch der Einsatz von Additiven wie Klebharzen nicht zu einer wesentlichen Verschlechterung der Vernetzungseffizienz im Vergleich zu den Vergleichsbeispielen VPSA18 und 19 führt. Anhand des Vergleichsbeispieles VPSA15 ist zu erkennen, dass erst die Abmischung mit dienophilen zu einer UV-Vernetzung führt.

## Patentansprüche

1. Monomerzusammensetzung umfassend ein Gemisch von
(i) 80 bis 99,9 Gew.-%, besonders bevorzugt 90 bis 99,5 Gew.-% wenigstens eines ersten Monomers der folgenden Struktur 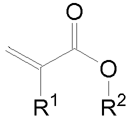 wobei R¹ Wasserstoff oder Methyl darstellt und R² Wasserstoff oder ein Alkylrest mit 1 bis 20 Kohlenstoffatomen ist;
(ii) 0,1 bis 10 Gew.-%, bevorzugt 0,5 bis 5 Gew.-% wenigstens eines zweiten Monomers, das ein (Meth-)Acrylatmonomer ist und eine ortho-Alkylphenylketon-funktionelle Gruppe und/oder eine ortho-Alkylphenylaldehyd-funktionelle Gruppe umfasst, die durch Bestrahlung mittels UV-Licht in eine Hydroxy-ortho-chinodimethan-funktionelle Gruppe isomerisierbar ist; sowie
(iii) optional bis zu 10 Gew.-% wenigstens eines weiteren, olefinisch ungesättigten Monomers mit funktionellen Gruppen,
wobei die Angaben in Gew.-% jeweils bezogen sind auf 100 Gew.-% der Monomere (i), (ii) und (iii) in der Zusammensetzung.

2. Monomerzusammensetzung nach Anspruch 1, wobei die ortho-Alkylphenylketon-funktionelle Gruppe und/oder die ortho-Alkylphenylaldehyd-funktionelle Gruppe des wenigstens einen zweiten Monomers die folgende Struktur aufweist: 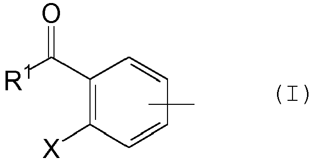 wobei R1 Wasserstoff oder Phenyl ist und X einen C-H-aciden Substituenten, bevorzugt Methyl darstellt.

3. Monomerzusammensetzung nach einem der Ansprüche 1 oder 2, wobei das zweite Monomer die folgende Struktur (II) aufweist: 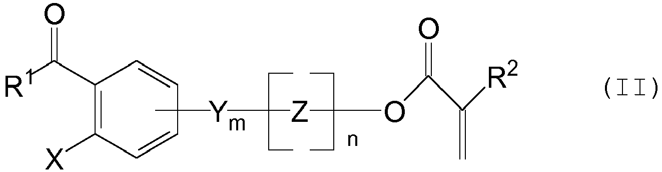 wobei R1 Wasserstoff oder Phenyl ist; X einen C-H-aciden Substituenten, bevorzugt Methyl darstellt; R2 Wasserstoff oder Methyl ist; Y ein C, O, S oder NH, bevorzugt O ist; Z eine Ethylenglykol- oder eine Propylenglykolgruppe ist oder für eine aromatische oder aliphatische C1-C18-Einheit steht; m 0 oder 1 ist; und n eine Zahl von 0-10, bevorzugt 1-10 ist.

4. Monomerzusammensetzung nach einem der vorhergehenden Ansprüche, wobei das zweite Monomer die folgende Struktur (IIa), bevorzugt eine der folgenden Strukturen (III) und (IV) aufweist: 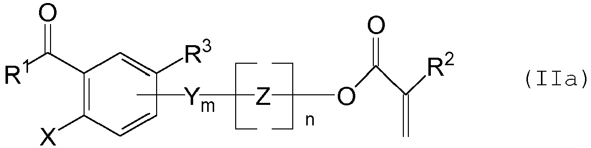 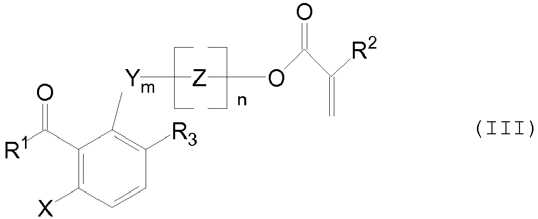 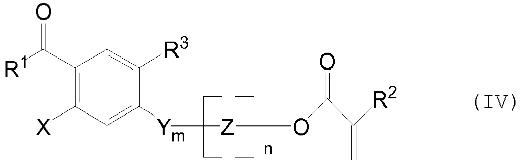 wobei R1 Wasserstoff oder Phenyl ist; X einen C-H-aciden Substituenten, bevorzugt Methyl darstellt; R2 Wasserstoff oder Methyl ist; Y ein C, O, S oder NH, bevorzugt O ist; Z eine Ethylenglykol- oder eine Propylenglykolgruppe ist oder für eine aromatische oder aliphatische C1-C18-Einheit steht; m 0 oder 1 ist; n eine Zahl von 0-10, bevorzugt 1-10 ist; und R3 Wasserstoff oder Alkyl, bevorzugt Wasserstoff oder Methyl ist.

5. Monomerzusammensetzung nach einem der vorhergehenden Ansprüche, wobei das erste Monomer der Gruppe (i) ausgewählt ist aus Acrylsäure, Methacrylsäure, Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, deren Strukturisomeren sowie Mischungen hiervon;
und/oder wobei das zweite Monomer der Gruppe (ii) ausgewählt ist aus der Gruppe bestehend aus (Meth)Acrylsäureestern umfassend eine 2-Formyl-3-methylphenoxy- oder eine 4-Benzoyl-2,5-dimethylphenoxy-Gruppe, bevorzugt 2-(2'-Formyl-3'-methylphenoxy)ethylacrylat, 2-(2'-Formyl-3'-methylphenoxy)ethylmethacrylat, 2-(4'-Benzoyl-2',5'-dimethylphenoxy)ethylacrylat und 2-(4'-Benzoyl-2',5'-dimethylphenoxy)ethylmethacrylat;
und/oder wobei das dritte Monomer der Gruppe (iii) ausgewählt ist aus Maleinsäureanhydrid, Itaconsäureanhydrid, Glycidylmethacrylat, Hydroxyethylacrylat, 4-Hydroxybutylacrylat, Benzylacrylat, Benzylmethacrylat, Phenylacrylat, Phenylmethacrylat, tert-Butylphenylacrylat, tert-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat Tetrahydrofurfurylacrylat, und weiteren aromatischen Vinylverbindungen, bevorzugt Styrol, 4-Vinylpyridin, N-Vinylpyrollidon, N-Vinylphthalimid, Methylstyrol und 3,4-Dimethoxystyrol.

6. Verfahren zur Herstellung einer ersten Polymerzusammensetzung, umfassend
a) die Bereitstellung einer Monomerzusammensetzung nach einem der Ansprüche 1-5; und
b) die radikalische Polymerisation dieser Monomerzusammensetzung.

7. Polymerzusammensetzung, erhältlich nach dem Verfahren gemäß Anspruch 6.

8. Zusammensetzung umfassend
- 50 bis 99,9 Gew.-%, besonders bevorzugt 50 bis 99,7 Gew.-% der Polymerzusammensetzung nach Anspruch 7, sowie
- 0,1 bis 15 Gew.-%, bevorzugt 0,2 bis 12 Gew.-%, besonders bevorzugt 0,3 bis 10 Gew.-% eines Dienophils, bevorzugt ausgewählt aus der Gruppe der Alkene, Alkine, Nitrile, Imine, Azoverbindungen, Carbonylverbindungen und Dithioester, das mit Hydroxy-ortho-chinodimethanfunktionellen Gruppen in einer Diels-Alder- oder Hetero-Diels-Alder-Reaktion reagieren kann,
wobei die Angabe in Gew.-% bezogen ist auf 100 Gew.-% der ersten Polymerzusammensetzung und des Dienophils in der Zusammensetzung.

9. Zusammensetzung nach Anspruch 8, wobei das Dienophil wenigstens eine, bevorzugt wenigstens zwei funktionelle Gruppen aufweist, die ausgewählt sind aus der Gruppe bestehend aus Maleimiden, Acrylsäureestern und Dithioestern.

10. Verfahren zur Herstellung einer vernetzten Polymerzusammensetzung, umfassend die Bestrahlung der Zusammensetzung nach einem der Ansprüche 7 bis 9 mit UV-Licht unter Ausbildung einer vernetzten Polymerzusammensetzung.

11. Verfahren nach Anspruch 10, umfassend einen Heiß-Schmelzextrusionsschritt der Zusammensetzung nach einem der Ansprüche 7 bis 9 vor der Bestrahlung mit UV-Licht, wobei die Zusammensetzung während des Heiß-Schmelzextrusionsschrittes bevorzugt mit weiteren Additiven und/oder Harzen und/oder Polymeren und/oder Füllstoffen vermischt wird.

12. Vernetzte Polymerzusammensetzung, erhältlich nach dem Verfahren gemäß Anspruch 10 oder 11.

13. Polymerzusammensetzung nach Anspruch 12, wobei die Polymerzusammensetzung eine Haftklebmasse ist.

14. Verwendung einer vernetzten Polymerzusammensetzung nach Anspruch 12 als Haftklebmasse.

15. Verwendung einer Monomerzusammensetzung nach einem der Ansprüche 1-5 zur Herstellung einer Haftklebmasse.

## Claims

1. Monomer composition comprising a mixture of
(i) from 80 to 99.9% by weight, particularly preferably from 90 to 99.5% by weight, of at least one first monomer having the following structure 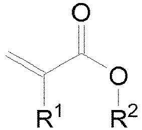 wherein R¹ represents hydrogen or methyl and R² is hydrogen or an alkyl radical having from 1 to 20 carbon atoms;
(ii) from 0.1 to 10% by weight, preferably from 0.5 to 5% by weight, of at least one second monomer which is a (meth)acrylate monomer and comprises an ortho-alkylphenyl ketone-functional group and/or an ortho-alkylphenylaldehyde-functional group which is isomerizable to a hydroxy-ortho-quinodimethane-functional group by irradiation by means of UV light; and
(iii) optionally up to 10% by weight of at least one further, olefinically unsaturated monomer having functional groups,
wherein the data in % by weight are in each case based on 100% by weight of monomers (i), (ii) and (iii) in the composition.

2. Monomer composition according to Claim 1, wherein the ortho-alkylphenyl ketone-functional group and/or the ortho-alkylphenylaldehyde-functional group of the at least one second monomer has the following structure: 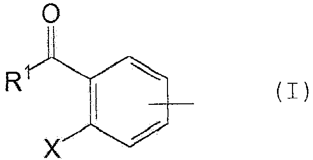 wherein R1 is hydrogen or phenyl and X represents a C-H-acidic substituent, preferably methyl.

3. Monomer composition according to either Claim 1 or Claim 2, wherein the second monomer has the following structure (II) : 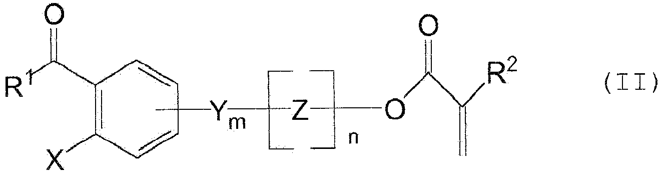 wherein R1 is hydrogen or phenyl; X represents a C-H-acidic substituent, preferably methyl; R2 is hydrogen or methyl; Y is a C, O, S or NH, preferably O; Z is an ethylene glycol or propylene glycol group or represents an aromatic or aliphatic C1-C18-unit; m is 0 or 1; and n is a number from 0 to 10, preferably from 1 to 10.

4. Monomer composition according to one of the preceding claims, wherein the second monomer has the following structure (IIa), preferably one of the following structures (III) and (IV): 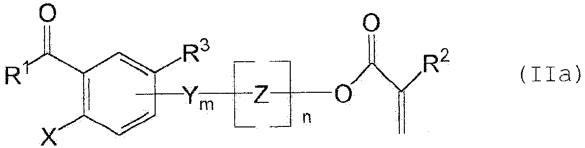 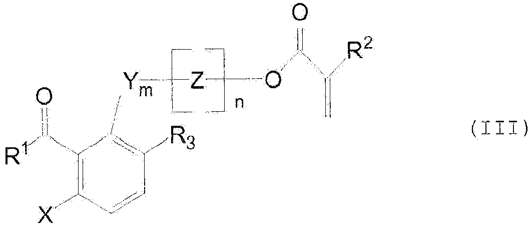 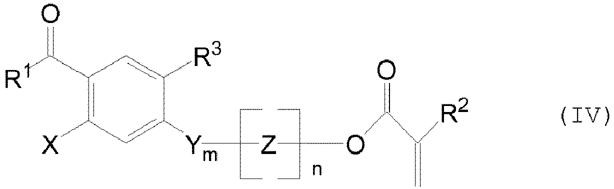 wherein R1 is hydrogen or phenyl; X represents a C-H-acidic substituent, preferably methyl; R2 is hydrogen or methyl; Y is a C, O, S or NH, preferably O; Z is an ethylene glycol or propylene glycol group or represents an aromatic or aliphatic C1-C18-unit; m is 0 or 1; n is a number from 0 to 10, preferably from 1 to 10; and R3 is hydrogen or alkyl, preferably hydrogen or methyl.

5. Monomer composition according to one of the preceding claims, wherein the first monomer of group (i) is selected from acrylic acid, methacrylic acid, methyl acrylate, methyl methacrylate, ethyl acrylate, ethyl methacrylate, propyl acrylate, propyl methacrylate, n-butyl acrylate, n-butyl methacrylate, n-pentyl acrylate, n-hexyl acrylate, n-hexyl methacrylate, n-heptyl acrylate, n-octyl acrylate, n-nonyl acrylate, lauryl acrylate, stearyl acrylate, stearyl methacrylate, behenyl acrylate, their structural isomers and mixtures thereof;
and/or wherein the second monomer of group (ii) is selected from the group consisting of (meth)acrylic acid esters comprising a 2-formyl-3-methylphenoxy group or a 4-benzoyl-2,5-dimethylphenoxy group, preferably 2-(2'-formyl-3'-methylphenoxy)ethyl acrylate, 2-(2'-formyl-3'-methylphenoxy)ethyl methacrylate, 2-(4'-benzoyl-2',5'-dimethylphenoxy)ethyl acrylate and 2-(4'-benzoyl-2',5'-dimethylphenoxy)ethyl methacrylate;
and/or wherein the third monomer of group (iii) is selected from maleic anhydride, itaconic anhydride, glycidyl methacrylate, hydroxyethyl acrylate, 4-hydroxybutyl acrylate, benzyl acrylate, benzyl methacrylate, phenyl acrylate, phenyl methacrylate, tert-butylphenyl acrylate, tert-butylphenyl methacrylate, phenoxyethyl acrylate, phenoxyethyl methacrylate, 2-butoxyethyl methacrylate, 2-butoxyethyl acrylate, dimethylaminoethyl methacrylate, dimethylaminoethyl acrylate, diethylaminoethyl methacrylate, diethylaminoethyl acrylate and tetrahydrofurfuryl acrylate, and further aromatic vinyl compounds, preferably styrene, 4-vinylpyridine, N-vinylpyrrolidone, N-vinylphthalimide, methylstyrene and 3,4-dimethoxystyrene.

6. Process for the preparation of a first polymer composition, which process comprises
a) providing a monomer composition according to one of Claims 1 to 5; and
b) radically polymerizing the monomer composition.

7. Polymer composition obtainable by the process according to Claim 6.

8. Composition comprising
- from 50 to 99.9% by weight, particularly preferably from 50 to 99.7% by weight, of the polymer composition according to Claim 7 and
- from 0.1 to 15% by weight, preferably from 0.2 to 12% by weight, particularly preferably from 0.3 to 10% by weight, of a dienophile, preferably selected from the group of the alkenes, alkynes, nitriles, imines, azo compounds, carbonyl compounds and dithioesters, that is able to react with hydroxy-ortho-quinodimethane-functional groups in a Diels-Alder or hetero-Diels-Alder reaction,
wherein the data in % by weight are based on 100% by weight of the first polymer composition and of the dienophile in the composition.

9. Composition according to Claim 8, wherein the dienophile contains at least one, preferably at least two, functional groups selected from the group consisting of maleimides, acrylic acid esters and dithioesters.

10. Process for the preparation of a crosslinked polymer composition, which process comprises irradiating the composition according to one of Claims 7 to 9 with UV light to form a crosslinked polymer composition.

11. Process according to Claim 10, which process comprises a step of hot-melt extrusion of the composition according to one of Claims 7 to 9 prior to irradiation with UV light, wherein the composition is preferably mixed with further additives and/or resins and/or polymers and/or fillers during the hot-melt extrusion step.

12. Crosslinked polymer composition obtainable by the process according to Claim 10 or 11.

13. Polymer composition according to Claim 12, wherein the polymer composition is a pressure-sensitive adhesive.

14. Use of a crosslinked polymer composition according to Claim 12 as a pressure-sensitive adhesive.

15. Use of a monomer composition according to one of Claims 1 to 5 in the production of a pressure-sensitive adhesive.

## Revendications

1. Composition de monomères, comprenant un mélange de :
(i) 80 à 99,9 % en poids, de manière particulièrement préférée 90 à 99,5 % en poids d'au moins un premier monomère de la structure suivants : 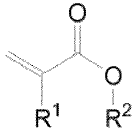 dans laquelle R¹ représente hydrogène ou méthyle, et R² représente hydrogène ou un radical alkyle de 1 à 20 atomes de carbone ;
(ii) 0,1 à 10 % en poids, de préférence 0,5 à 5 % en poids d'au moins un deuxième monomère, qui est un monomère de (méth)acrylate et comprend un groupe fonctionnel ortho-alkylphénylcétone et/ou un groupe fonctionnel ortho-alkylphénylaldéhyde, qui est isomérisable par exposition à de la lumière UV en un groupe fonctionnel hydroxy-ortho-quinodiméthane ; et
(iii) éventuellement jusqu'à 10 % en poids d'au moins un autre monomère oléfiniquement insaturé comprenant des groupes fonctionnels,
les indications en % en poids se rapportant à chaque fois à 100 % en poids des monomères (i), (ii) et (iii) dans la composition.

2. Composition de monomères selon la revendication 1, dans laquelle le groupe fonctionnel ortho-alkylphénylcétone et/ou le groupe fonctionnel ortho-alkylphénylaldéhyde dudit au moins un deuxième monomère présentent la structure suivants : 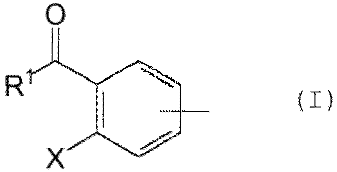 dans laquelle R1 représente hydrogène ou phényle, et X représente un substituant C-H acide, de préférence méthyle.

3. Composition de monomères selon l'une quelconque des revendications 1 ou 2, dans laquelle le deuxième monomère présente la structure (II) suivants : 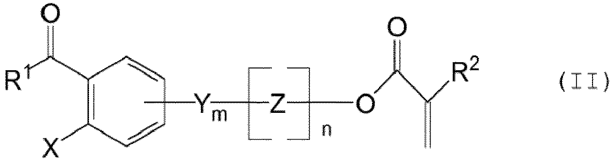 dans laquelle R1 représente hydrogène ou phényle ; X représente un substituant C-H acide, de préférence méthyle ; R2 représente hydrogène ou méthyle ; Y représente C, O, S ou NH, de préférence O ; Z représente un groupe éthylène glycol ou propylène glycol, ou représente une unité en C1-C18 aromatique ou aliphatique ; m représente 0 ou 1 ; et n est un nombre de 0 à 10, de préférence de 1 à 10.

4. Composition de monomères selon l'une quelconque des revendications précédentes, dans laquelle le deuxième monomère présente la structure (IIa) suivante, de préférence une des structures (III) et (IV) suivantes : 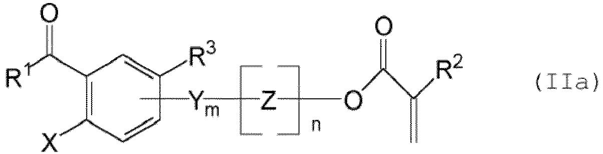 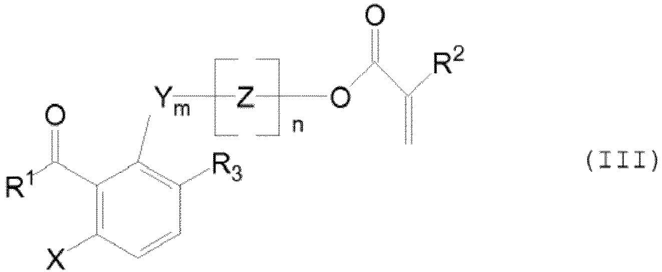 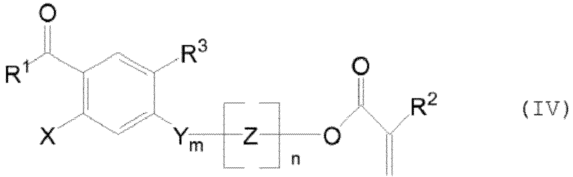 dans lesquelles R1 représente hydrogène ou phényle ; X représente un substituant C-H acide, de préférence méthyle ; R2 représente hydrogène ou méthyle ; Y représente C, O, S ou NH, de préférence O ; Z représente un groupe éthylène glycol ou propylène glycol, ou représente une unité C1-C18 aromatique ou aliphatique ; m représente 0 ou 1 ; n représente un nombre de 0 à 10, de préférence de 1 à 10 ; et R3 représente hydrogène ou alkyle, de préférence hydrogène ou méthyle.

5. Composition de monomères selon l'une quelconque des revendications précédentes, dans laquelle le premier monomère du groupe (i) est choisi parmi l'acide acrylique, l'acide méthacrylique, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de n-pentyle, l'acrylate de n-hexyle, le méthacrylate de n-hexyle, l'acrylate de n-heptyle, l'acrylate de n-octyle, l'acrylate de n-nonyle, l'acrylate de lauryle, l'acrylate de stéaryle, le méthacrylate de stéaryle, l'acrylate de béhényle, leurs isomères structuraux et leurs mélanges ; et/ou dans laquelle le deuxième monomère du groupe (ii) est choisi dans le groupe constitué par les esters de l'acide (méth)acrylique comprenant un groupe 2-formyl-3-méthylphénoxy ou 4-benzoyl-2,5-diméthylphénoxy, de préférence l'acrylate de 2-(2'-formyl-3'-méthylphénoxy)éthyle, le méthacrylate de 2-(2'-formyl-3'-méthylphénoxy)éthyle, l'acrylate de 2-(4'-benzoyl-2',5'-diméthylphénoxy)éthyle et le méthacrylate de 2-(4'-benzoyl-2',5'-diméthylphénoxy)éthyle ;
et/ou dans laquelle le troisième monomère du groupe (iii) est choisi parmi l'anhydride de l'acide maléique, l'anhydride de l'acide itaconique, le méthacrylate de glycidyle, l'acrylate d'hydroxyéthyle, l'acrylate de 4-hydroxybutyle, l'acrylate de benzyle, le méthacrylate de benzyle, l'acrylate de phényle, le méthacrylate de phényle, l'acrylate de tert-butylphényle, le méthacrylate de tert-butylphényle, l'acrylate de phénoxyéthyle, le méthacrylate de phénoxyéthyle, le méthacrylate de 2-butoxyéthyle, l'acrylate de 2-butoxyéthyle, le méthacrylate de diméthylaminoéthyle, l'acrylate de diméthylaminoéthyle, le méthacrylate de diéthylaminoéthyle, l'acrylate de diéthylaminoéthyle, l'acrylate de tétrahydrofurfuryle, et les autres composés aromatiques de vinyle, de préférence le styrène, la 4-vinylpyridine, la N-vinylpyrolidone, le N-vinylphtalimide, le méthylstyrène et le 3,4-diméthoxystyrène.

6. Procédé de fabrication d'une première composition de polymère, comprenant :
a) la préparation d'une composition de monomères selon l'une quelconque des revendications 1 à 5 ; et
b) la polymérisation radicalaire de cette composition de monomères.

7. Composition de polymère, pouvant être obtenue par le procédé selon la revendication 6.

8. Composition, comprenant :
- 50 à 99,9 % en poids, de manière particulièrement préférée 50 à 99,7 % en poids de la composition de polymère selon la revendication 7, et
- 0,1 à 15 % en poids, de préférence 0,2 à 12 % en poids, de manière particulièrement préférée 0,3 à 10 % en poids d'un diénophile, de préférene choisi dans le groupe constitué par les alcènes, les alcynes, les nitriles, les imines, les composés azo, les composés de carbonyle et les dithioesters, qui peut réagir avec des groupes fonctionnels hydroxy-ortho-quinodiméthane dans une réaction de Diels-Alder ou d'hétéro-Diels-Alder,
les indications en % en poids se rapportant à 100 % en poids de la première composition de polymère et du diénophile dans la composition.

9. Composition selon la revendication 8, dans laquelle le diénophile comprend au moins un, de préférence au moins deux groupes fonctionnels, qui sont choisis dans le groupe constitué par les maléimides, les esters de l'acide acrylique et les dithioesters.

10. Procédé de fabrication d'une composition de polymère réticulée, comprenant l'exposition de la composition selon l'une quelconque des revendications 7 à 9 à de la lumière UV avec formation d'une composition de polymère réticulée.

11. Procédé selon la revendication 10, comprenant une étape d'extrusion de masse fondue à chaud de la composition selon l'une quelconque des revendications 7 à 9 avant l'exposition à la lumière UV, la composition étant de préférence mélangée avec d'autres additifs et/ou résines et/ou polymères et/ou charges pendant l'étape d'extrusion de masse fondue à chaud.

12. Composition de polymère réticulée, pouvant être obtenue par le procédé selon la revendication 10 ou 11.

13. Composition de polymère selon la revendication 12, dans laquelle la composition de polymère est une masse adhésive de contact.

14. Utilisation d'une composition de polymère réticulée selon la revendication 12 en tant que masse adhésive de contact.

15. Utilisation d'une composition de monomères selon l'une quelconque des revendications 1 à 5 pour la fabrication d'une masse adhésive de contact.
